# EUROPEAN PATENT SPECIFICATION

(11) **EP 4 367 422 B1**
(45) Date of publication and mention of the grant of the patent: **02.12.2026**
(21) Application number: 22737486.5
(22) Date of filing: 30.06.2022
(51) Int. Cl.: F16K 5/06, F16K 11/087, F16K 27/06, F16K 31/04

(54) **A REGULATING VALVE ARRANGEMENT AND AN OBTURATOR**
REGELVENTILANORDNUNG UND OBTURATOR
AGENCEMENT DE SOUPAPE DE RÉGULATION ET OBTURATEUR

(30) Priority: 08.07.2021 SE 2150908
(43) Date of publication of application: 15.05.2024
(73) Proprietor: LK Armatur AB, 254 66 Helsingborg (SE)
(72) Inventor: RAGNVID, Tobias, 262 70 Strövelstorp (SE); BENCELL, Laszlo, 265 31 Åstorp (SE)
(74) Representative: AWA Sweden AB
(86) International application number: PCT/EP2022/068160
(87) International publication number: WO 2023/280686

(56) References cited:
- EP-A1- 2 796 755
- WO-A1-2020/157612
- DE-A1- 10 235 997
- DE-A1- 102018 214 174
- IT-A1- BZ20 090 047
- US-A- 5 988 220
- US-A1- 2007 107 789
- US-A1- 2018 209 549
- US-A1- 2018 259 076

## Description

### Field of the Invention

The present invention relates to a regulating valve arrangement and a ball-shaped obturator.

### Background of the Invention

A typical regulating valve arrangement comprises a hollow housing having an inlet port and two or more outlet ports. The fluid flow through the housing and hence from the inlet port to the respective outlet ports is controlled by rotating an obturator which selectively opens and closes the outlet ports.

While the housing in prior art regulating valves typically is made by a metal material such as brass, the obturator may be made by either metal or a polymeric material. There is however a strive on the market towards also the housing being made of a polymeric material. While one driver is cost cut, another driver is new directives regarding levels of lead in components in contact with tap water and especially drinking water. A change of material is however not a straight-forward substitution since many aspects must be considered.

Among existing regulating valve arrangements, US 5988220 A, which document discusses a three-way ball valve, WO 2020/157612, US 2007/107789, IT BZ20 090 047, US 2018/209549, EP 2 796 755 A1, which document discusses a spherical obturator for a ball valve, DE 102 35 997 A1, which document discusses a valve arrangement having a spherical obturator, DE 10 2018 214174, and US 2018/259076 may be mentioned.

As a first aspect, a substitution of material requires new technical design solutions to allow manufacturing and assembly of the valve parts. It also requires a new technical design that withstands load, aging and wear. By way of example, while sealing surfaces in a housing made of a metallic material may be machined to very fine tolerances to provide good sealing properties, it is very difficult or even impossible to reach similar tolerances when instead using a polymeric material. This applies no matter if the polymeric material is moulded or machined. This means that sealing solutions which are suitable for metal housings are not suitable in polymeric housing.

Further, the load is an issue when using a polymeric material. When setting a regulating valve to open a port, an inevitable pressure pulse is generated by the fluid and which pressure pulse propagates before being absorbed by the valve arrangement. This is of a minor problem when substantially all parts are made of metal due to an inherent higher strength and weight, but when replacing metal with a polymeric material, there is a risk of leakage.

As a second aspect, a substitution of material changes the chemical environment in and around the valve which affects the formation of deposits. Deposits are known to have an impact on wear and hence the overall life length of the regulating valve and especially when it comes to regulating valves which are not operated on a regular basis. A higher torque may be required to break the deposits. In those cases where the obturator is controlled by a motorized actuator, it may be necessary to re-design the interface between the actuator and the obturator to allow such higher torque.

There is hence a need to provide a new overall design of a polymeric regulating valve arrangement, which meets applicable standards and regulations, which is easy to manufacture and assemble, and which is robust enough to withstand forces and environmental conditions during its intended use and during intended useful life.

### Summary of the Invention

It is an object of the invention to at least partly overcome the above problems.

A first object is to provide a regulating valve arrangement which is designed to be fully made of a polymeric material.

Another object is to provide a regulating valve arrangement which allows a reduction of pressure pulses that inevitably occur when opening a port.

Yet another object is to provide a regulating valve arrangement which allows an easy manufacturing and assembly.

These and other objects may at least partly be met by means of the invention as defined by the independent claims.

According to a first aspect, a regulating valve arrangement according to claim 1 is provided. The regulating valve arrangement comprises:
an internally hollow housing made of a polymeric material comprising an inlet port surrounding an inlet opening, a first outlet port comprising a first outlet seating surrounding a first outlet opening and a second outlet port having a second outlet opening;
a first sealing member configured to directly or indirectly abut the first outlet seating; and
a ball-shaped obturator made of a polymeric material having a first fluid channel extending between an inlet opening portion and an outlet opening portion thereof, the obturator being rotatable in relation to the first sealing member, said inlet opening portion being configured to communicate with the inlet port of the housing and said outlet opening portion being configured to selectively communicate with the first outlet opening in the housing by rotating the obturator; wherein
the ball-shaped obturator comprises a first outlet sealing portion in an outer envelope surface thereof which partly or fully encircles the outlet opening portion of the obturator, said first outlet sealing portion being configured to selectively sealingly abut the first sealing member; and
the regulating valve arrangement further comprises:
   an adaptor configured to be mounted to the second outlet port of the housing, said adaptor comprising a second outlet seating surrounding an adaptor outlet opening configured to communicate with the second outlet opening of the housing; and
   a second sealing member configured to directly or indirectly abut the second outlet seating; and wherein
   the first outlet sealing portion of the ball-shaped obturator is configured to selectively, by rotating the obturator, sealingly abut the second sealing member.

Accordingly, a regulating valve arrangement is provided which comprises a housing made of polymeric material. The housing comprises in its easiest form one inlet port and one outlet port, whereby the obturator during its rotation may be seen as an on-off valve which either opens or closes the first outlet port. The obturator may also be used to regulate the size of the outlet port to thereby regulate the flow there through.

The regulating valve arrangement uses a ball-shaped obturator. In the context of the invention, the term *"ball-shaped"* should be understood as a body having an outer envelope surface virtually expanding a sphere. Said outer envelope surface may be discontinuous with one or more recesses, and with one or more bevels. However, all sealing portions in the obturator are formed by the spherical outer envelope surface of the obturator and do hence have a curvature corresponding to the spherical shape.

The ball-shaped obturator comprises a first fluid channel which extends between an inlet opening portion and an outlet opening portion. The first fluid channel may extend through the obturator or be formed as a groove in an outer envelope surface of the obturator.

The ball-shaped obturator comprises a first outlet sealing portion which encircles the outlet opening portion of the obturator. The first outlet sealing portion is configured to selectively sealingly abut the first sealing member. The skilled person realizes that the sealing contact during a given instance is determined by how the obturator is rotated in view of the housing. The skilled person realizes that the obturator may comprise more than one outlet opening. In the event of one outlet opening, the obturator must be rotated 180 degrees to provide a full opening/closure of an outlet port of the housing. In the event of two or more outlet openings which are mutually offset 90 degrees, the obturator must only be rotated 90 degrees to provide a full opening/closure of an outlet port. This allows a faster regulation.

The first outlet sealing portion is formed by the outer envelope surface of the ball-shaped obturator. The first outlet sealing portion may be a strip-shaped portion of the outer envelope surface, which strip-shaped portion extends in a virtual plane having an extension in parallel with the rotational axis of the ball-shaped obturator. Thus, the first outlet sealing portion has along its outer envelope surface the same spherical extension as the outer envelope surface of the ball-shaped obturator. The width of said first outlet sealing portion is chosen to provide a leak-free sealing abutment between the first outlet sealing portion of the obturator and the first sealing member.

The ball-shaped obturator and the housing are preferably formed by injection moulding. The housing and the obturator may be formed by the same material or by different materials.

The first outlet sealing portion of the obturator is configured to sealingly abut a valve sealing portion which is formed by the first sealing member. Said first sealing member is additionally arranged to directly or indirectly abut a first outlet seating which is formed in the housing. The first sealing member serves the dual purpose as a sealing to prevent leakage, but also to compensate for any dimensional tolerance errors in the housing and the obturator respectively.

The first and second outlet ports and the inlet port of the housing may together provide the housing with an overall T-shape. The first and second outlet ports may be arranged linearly, opposite to each other. The skilled person realizes that the first and second outlet ports with remained function may form an angle to each other.

By providing an adaptor, a simplified assembly of the parts making up the regulating valve arrangement may be provided for. The first sealing member, the obturator and the second sealing member may all be inserted into the housing through the second outlet port and before mounting the adaptor. The adaptor will in its mounted position, by its outlet seating, force the second sealing member into a sealing abutment with a portion of the outer envelope surface of the ball-shaped obturator which faces the adaptor. At the same time, it will indirectly force an opposite portion of the outer envelope surface of the ball-shaped obturator which faces the first outlet port into a sealing engagement with the first sealing member. The skilled person realizes that exactly which portions of the outer envelope surface of the ball-shaped obturator which are in contact with the respective sealing members at a given instance is determined by how the obturator is rotated in view of the housing.

The first and second sealing members are preferably made by an elastic material. This applies no matter how the obturator is embodied. Thereby a leak-free sealing contact may be provided for and also, the sealing members may better conform to the available space between the seatings in the housing and the adaptor respectively and the outer envelope surface of the obturator. Thereby it is made possible to compensate for any dimensional tolerance errors in the housing, adaptor and obturator respectively. To further compensate for dimensional tolerance errors and also improve the sealing effect, one or more O-rings may be arranged in a position between the respective sealing members and their respective seatings in the housing and in the adaptor.

By arranging the two outlet ports in a diametrically opposing position, the housing may be given a generally T-shaped design and an actuator may be arranged in a position opposite the inlet port.

The first and second valve sealing members may be formed by two-component moulding. This may facilitate providing of seal members with desired characteristics.

Each valve sealing member preferably comprises a valve sealing surface which has a curvature complementary to the spherical shape of the ball-shaped obturator.

The ball-shaped obturator may further in an outer envelope surface thereof comprise a second outlet sealing portion arranged diametrically opposing the first outlet sealing portion.

The second outlet sealing portion may be used to allow a complete sealing-off of the second outlet port in the housing when the obturator is set to allow a fluid flow from the inlet port to the first outlet port. Correspondingly, when the obturator is rotated 180 degrees, the second outlet sealing portion may be used to allow a complete sealing-off of the first outlet port in the housing when the obturator is set to allow a fluid flow from the inlet port to the second outlet port.

The second outlet sealing portion is formed by the outer envelope surface of the ball-shaped obturator. The second outlet sealing portion may be a strip-shaped portion of the outer envelope surface which strip-shaped portion extends in a virtual plane having an extension in parallel with the rotational axis of the ball-shaped obturator. Thus, the second outlet sealing portion has along its outer envelope surface the same spherical extension as the outer envelope surface of the ball-shaped obturator. The width of said second outlet sealing portion is chosen to provide a leak-free sealing abutment between the first outlet sealing portion of the obturator and the first sealing member.

The skilled person realizes that the first and second outlet ports of the housing and hence the first and second outlet sealing surfaces with remained function must not be linearly arranged in view of each other but may form an angle to each other.

The ball-shaped obturator may in an outer envelope surface thereof further comprise an inlet sealing portion, the inlet sealing portion being arranged to concentrically at least partly encircle the inlet opening of the housing; and an actuator sealing portion, the actuator sealing portion being concentric with the rotation axis of the obturator and being arranged opposite the inlet sealing portion. Thus, the inlet sealing portion may be used to seal-off any leakage between the inlet opening in the housing and the obturator.

The inlet sealing portion is formed by the outer envelope surface of the ball-shaped obturator. The inlet sealing portion may be a strip-shaped portion of the outer envelope surface which strip-shaped portion extends in a virtual plane having an extension transverse to the rotational axis of the ball-shaped obturator. Thus, the inlet sealing portion has along its outer envelope surface the same spherical extension as the outer envelope surface of the ball-shaped obturator. The width of said inlet sealing portion is chosen to provide a leak-free sealing abutment between the inlet sealing portion and the first and second sealing members.

The second outlet sealing portion of the ball-shaped obturator may be configured to sealingly abut the second sealing member in a condition when the ball-shaped obturator is rotated into a position where the first outlet sealing portion sealingly abuts the first sealing member, thereby allowing a fluid flow through the housing and the fluid channel in the obturator from the inlet port to the first outlet port; and wherein
the second outlet sealing portion of the ball-shaped obturator may be configured to sealingly abut the first sealing member in a condition when the ball-shaped obturator is rotated into a position where the first outlet sealing portion sealingly abuts the second sealing member, thereby allowing a fluid flow through the housing and the fluid channel in the obturator from the inlet port to the second outlet port.

Thus, depending on how the obturator is rotated inside the housing, it is determined which outlet sealing portion of the obturator communicates with which sealing member and hence through which outlet port in the housing the fluid exits the valve arrangement.

The adaptor may be configured to directly, or indirectly, force the second sealing member and the first sealing member to sealingly abut the outer envelope surface of the obturator.

The first and second sealing members are arranged in opposite sides of the obturator. Depending on the design of the sealing members, O-rings may be arranged between the sealing members and their respective seatings which are arranged in the housing and the adaptor respectively.

The ball-shaped obturator may in an outer envelope surface thereof comprises a web of sealing portions configured to selectively sealingly abut the first sealing member and the second sealing member during rotation of the obturator; and wherein
the web of sealing portions merges with the first outlet sealing portion, the second outlet sealing portion, the inlet sealing portion and the actuator sealing portion of the obturator, thereby forming a continuous virtually spherical sealing portion.

The web of sealing portions is formed by the outer envelope surface of the ball-shaped obturator. The sealing portions may be strip-shaped portions of the outer envelope surface. Thus, the web with its sealing portions have along its outer envelope surface the same spherical extension as the outer envelope surface of the ball-shaped obturator.

The web of sealing portions contributes to the formation of an intermittent sealing portion between the first and second sealing members and the outer envelope surface of the ball-shaped obturator in a position when the obturator is rotated into a position where there is no longer any full sealing contact between the first and second sealing portions of the obturator and the first and second sealing members. Depending of the width of the first and second outlet outlet sealing portions of the obturator, an intermittent sealing portion is formed when rotating the ball-shaped obturator so that a longitudinal centreline which extends between the first and second outlet sealing portions of the obturator forms an angle of about 10-170 degrees in view of the longitudinal centreline which extends between the first and second outlet ports. The intermittent sealing portion allows a leak flow of fluid from the inlet opening in the obturator and which leak flow is allowed to leave the housing partly through the fluid channel in the obturator and partly via an interspace between the outer envelope surface of the obturator and an inner wall of the chamber in the housing. This leak flow contributes to a reduction of the inevitable pressure pulse which occurs when setting a regulating valve.

According to the first aspect, the outer envelope surface of the ball-shaped obturator further comprises a web
of sealing portions defining a plurality of recesses in the outer envelope surface.

The plurality of recesses allows a first fluid flow through the fluid channel in the obturator from the inlet opening to the first outlet opening in the housing, and a second fluid flow from the inlet opening to the second outlet opening in the housing via an interspace which is formed between the outer envelope surface of the obturator and an inner wall of the housing, said first and second fluid flows being allowed during an intermediate obturator position being present when rotating the obturator from an obturator position in which the first outlet opening is fully opened and the second outlet opening is fully closed, to an obturator position in which the first outlet opening is fully closed and the second outlet opening is fully opened.

The web of sealing portions in combination with the recesses contribute to the formation of an intermittent sealing surface between the first and second sealing members and the outer envelope surface of the ball-shaped obturator in a position when the obturator is rotated into a position where there is no longer any full sealing contact between the first and second sealing portions of the obturator and the first and second sealing members. Depending of the width of the first and second outlet sealing portions of the obturator, an intermittent sealing portion is formed when rotating the ball-shaped obturator along an intermediate obturator position, i.e. so that a longitudinal centreline which extends between the first and second outlet sealing portions of the obturator forms an angle of about 10-170 degrees in view of the longitudinal centreline which extends between the first and second outlet ports. During this range, the first outlet opening will be either substantially fully opened and the second outlet opening substantially fully closed or the first outlet opening will be substantially fully closed and the second outlet opening substantially fully opened.

The intermittent sealing surface allows a leak flow of fluid from the inlet opening in the obturator and which leak flow is allowed to leave the housing partly through the fluid channel in the obturator and partly via an interspace between the outer envelope surface of the obturator and an inner wall of the chamber in the housing. By the recesses which are defined by the web of sealing portions, a larger volume for the leak flow is created which contributes to a reduction of the inevitable pressure pulse which occurs when setting a regulating valve. More precisely, as a result of the web-shaped pattern of recesses, the available volume for the second flow of fluid will vary over time as the obturator is rotated. The effect is an improved accommodation the pressure pulse which inevitable when opening an outlet port.

At least one recess in the outer envelope surface of the ball-shaped obturator may be defined at least partly by the web of sealing portions and the first outlet sealing portion and the inlet sealing portion or the actuator sealing portion; and at least one recess in the outer envelope surface of the ball-shaped obturator may be defined at least partly by the web of sealing portions and the second outlet sealing portion and the inlet sealing portion or the actuator sealing portion.

The skilled person realizes that the pattern of the web and recesses may be varied within the scope of the invention.

The regulating valve arrangement may further comprising a spindle, said spindle comprises a non-rotation symmetrical first end portion that is configured to lockingly engage a complementary recess of an actuator sealing portion of the obturator, and wherein a free end of the first end portion of the spindle is provided with a non-rotation symmetrical geometry that is complementary to a bottom portion of the recess of the obturator. This is applicable, no matter embodiment of the obturator.

As a result of this complementary shape, it is ensured that the spindle always will be correctly oriented in view of the obturator. This in turn ensures that the outlet opening of the obturator always will be correctly mounted in view of the first and second outlet ports of the housing. Further, by the complementary shape, a better load distribution is achieved between the spindle and the obturator during setting of the obturator by means of the actuator. A good load distribution is essential since when the obturator and/or the spindle are made of a polymeric material.

The ball-shaped obturator may in one embodiment of the regulating valve comprise a first fluid channel in the form of a groove which extends along the outer envelope surface of the obturator between a first inlet opening portion and a first outlet opening portion of the first fluid channel; and
wherein the outer envelope surface comprises a first sealing portion continuously extending along the edge of the first fluid channel of the obturator.

In such embodiment, the ball-shaped obturator may further comprise a second fluid channel which extends through the obturator between a first opening and a second opening; and
wherein the outer envelope surface comprises a second sealing portion continuously encircling the first opening of the second fluid channel and a third sealing portion continuously encircling the second opening of the second fluid channel; and
wherein the second and third sealing portions encircling the openings of the second fluid channel are configured to selectively sealingly abut the first and second sealing members of the housing by rotating the obturator.

According to another non-claimed aspect, a ball-shaped obturator being made of a polymeric material and to be arranged in a regulating valve arrangement is provided. The ball-shaped obturator comprises an outer envelope surface and a fluid channel extending through the obturator between an inlet opening and an outlet opening thereof, wherein the outer envelope surface comprises:
a first outlet sealing portion continuously encircling the outlet opening of the obturator; and
an inlet sealing portion continuously encircling the inlet opening of the obturator.

The ball-shaped obturator has previously been discussed above in the context of a regulating valve arrangement, both in terms of design and function. Those arguments are equally applicable to the ball-shaped obturator as a stand-alone unit for use in other types of regulating valve arrangements or as a spare part. Thus, to avoid undue repetition, reference is made to the discussion above.

The outer envelope surface may further comprise a second outlet sealing surface and an actuator sealing portion; and a web of sealing portions defining a plurality of recesses in the outer envelope surface of the ball-shaped obturator, said web of sealing portions merging with the first and second outlet sealing portions, with the inlet sealing portion and with the actuator sealing portion thereby forming a continuous virtually spherical sealing surface.

The web of sealing portions is formed by the outer envelope surface of the ball-shaped obturator. The sealing portions may be strip-shaped portions of the outer envelope surface. Thus, the web with its sealing portions have along its outer envelope surface the same spherical extension as the outer envelope surface of the ball-shaped obturator. The skilled person realizes that the pattern of the web may be varied within the scope of the invention.

The obturator may comprise two outlet openings, said two outlet openings being mutually offset 75-105 degrees and more preferred 90 degrees as seen around the rotation axis. Thereby a very fast regulation may be achieved since the obturator only must be rotated 75-105, or even only 90 degrees, around the rotation axis to completely open or close an outlet port.

Accordingly, and in short, the ball-shaped obturator is a body having an outer envelope surface which virtually expanding a sphere. Said outer envelope surface may be discontinuous with one or more recesses, and with one or more bevels. All sealing portions in the obturator are formed by the spherical outer envelope surface and do hence have a curvature corresponding to the spherical shape.

The first and second outlet sealing portions are formed by the outer envelope surface of the ball-shaped obturator. The first and second outlet sealing portions may each be formed by a strip-shaped portion of the outer envelope surface which strip-shaped portion extends in a virtual plane having an extension in parallel with the rotational axis of the ball-shaped obturator. Thus, the first and second outlet sealing portion have along their outer envelope surface the same spherical extension as the outer envelope surface of the ball-shaped obturator. The width of said first and second outlet sealing portions is chosen to provide a leak-free sealing abutment between the outlet sealing portions of the obturator and sealing members in the housing in which the obturator is intended to be used.

The inlet sealing portion is formed by the outer envelope surface of the ball-shaped obturator. The inlet sealing portion may be a strip-shaped portion of the outer envelope surface which strip-shaped portion extends in a virtual plane having an extension transverse to the rotational axis of the ball-shaped obturator. Thus, the inlet sealing portion has along its outer envelope surface the same spherical extension as the outer envelope surface of the ball-shaped obturator. The width of said inlet sealing portion is chosen to provide a leak-free sealing abutment between the inlet sealing portion and the first and second sealing members to be arranged in the housing.

The ball-shaped obturator, no matter design, is preferably formed by injection moulding.

According to another non-claimed embodiment, a ball-shaped obturator being made of a polymeric material and comprising an outer envelope surface is provided. The ball-shaped obturator comprises a first fluid channel in the form of a groove which extends along the outer envelope surface of the obturator between a first inlet opening portion and a first outlet opening portion of the first fluid channel; and
wherein the outer envelope surface comprises a first sealing portion which extends continuously along an edge of the first fluid channel of the obturator.

The ball-shaped obturator has previously been discussed above in the context of a regulating valve arrangement, both in terms of design and function. Those arguments are equally applicable to the ball-shaped obturator as a stand-alone unit for use in other types of regulating valve arrangements or as a spare part. Thus, to avoid undue repetition, reference is made to the discussion above.

The ball-shaped obturator according to this embodiment may further comprise a second fluid channel which extends through the obturator between a first opening and a second opening; and wherein the outer envelope surface of the obturator comprises a second sealing portion continuously encircling the first opening of the second fluid channel and a third sealing portion continuously encircling the second opening of the second fluid channel.

The first sealing portion, the second sealing portion and the third sealing portion may form a continuous sealing surface across the outer envelope surface of the obturator.

The first fluid channel may have a substantially L-shaped extension and the second fluid channel may have a substantially linear extension.

A cross-sectional area, as seen transverse to a longitudinal extension of the first fluid channel of the first inlet opening portion may equal or be different from a cross-sectional area of the second outlet opening portion.

The first outlet opening portion of the first fluid channel, the first opening of the second fluid channel and the second opening of the second fluid channel may be mutually offset 75-105 degrees and more preferred 90 degrees, as seen around the rotation axis L1.

Accordingly, in short, a non-claimed regulating valve arrangement as comprising an obturator 300" according to the third embodiment may be described as follows:
A regulating valve arrangement, comprising:
an internally hollow housing made of a polymeric material comprising an inlet port surrounding an inlet opening, a first outlet port comprising a first outlet seating surrounding a first outlet opening and a second outlet port having a second outlet opening, and a first sealing member configured to directly or indirectly abut the first
   outlet seating;
an adaptor configured to be mounted to the second outlet port of the housing, said adaptor comprising a second outlet seating surrounding an adaptor outlet opening configured to communicate with the second outlet opening of the housing; and a second sealing member configured to directly or indirectly abut the second outlet seating; and
a ball-shaped obturator made of a polymeric material and comprising an outer envelope surface, wherein the ball-shaped obturator further comprises
a first fluid channel in the form of a groove which extends along the outer envelope surface of the obturator between a first inlet opening portion and a first outlet opening portion;
a second fluid channel which extends through the obturator between a first opening and a second opening; and
wherein
the obturator is rotatable in relation to the first and the second sealing members, and
said inlet opening portion of the first fluid channel is configured to communicate with the inlet port of the housing, and
said outlet opening portion of the first fluid channel, the first opening of the second fluid channel and the second opening of the second fluid channel are configured to selectively communicate with the first and the second outlet openingsin the housing by rotating the obturator.

The outer envelope surface of the obturator comprises a first sealing portion which extends continuously along the edge of the first fluid channel , a second sealing portion which continuously encircles the first opening of the second fluid channel and a third sealing portion which continuously encircles the second opening of the second fluid channel; and wherein said sealing portions are configured to selectively sealingly abut the first and the second sealing members .

### Brief Description of the Drawings

These and other aspects of the present invention will now be described in more detail with reference to the appended drawings showing embodiment(s) of the invention.
Fig. 1 is a general perspective view of one embodiment of the regulating valve arrangement.
Fig. 2 is an exploded view of the regulating valve arrangement.
Fig. 3 is a cross-section of the housing.
Fig. 4 is a cross-section of the adaptor.
Fig. 5a is a cross section of the ball-shaped obturator.
Fig. 5b is a top-view of the ball-shaped obturator.
Figs. 6a-6c are different perspective views of the ball-shaped obturator.
Fig. 7 is a perspective view of the spindle.
Fig. 8 discloses one embodiment of a sealing member.
Fig. 9a is a a cross section of the regulating valve arrangement.
Fig. 9b is a partial enlargement disclosing the sealing engagement between the first sealing member and the first outlet sealing portion.
Fig. 10 schematically discloses the leak flow.
Figs. 11a and 11b disclose one embodiment of a locking pin.
Figs. 12a and 12b disclose two different perspective views of a first alternative embodiment of a ball-shaped obturator.
Fig. 13 is a schematic cross section of a housing using such first alternative ball-shaped obturator.
Figs. 14a and 14b disclose two different perspective views of a second alternative embodiment of a ball-shaped obturator.
Figs. 15a and 15b disclose two schematic cross sections of a housing using such alternative ball-shaped obturator.
Fig. 16 discloses an alternative way of mounting the adaptor to the housing.

### Detailed Description

The present invention will now be described more fully hereinafter with reference to the accompanying drawings, in which currently preferred embodiments of the invention are shown. This invention may be embodied in many different forms as long as they fall within the scope of the attached claims and should not be construed as limited to the embodiments set forth herein. Rather, these embodiments are provided for thoroughness and completeness, and fully convey the scope of the invention to the skilled person, said invention being defined by the appended claims.

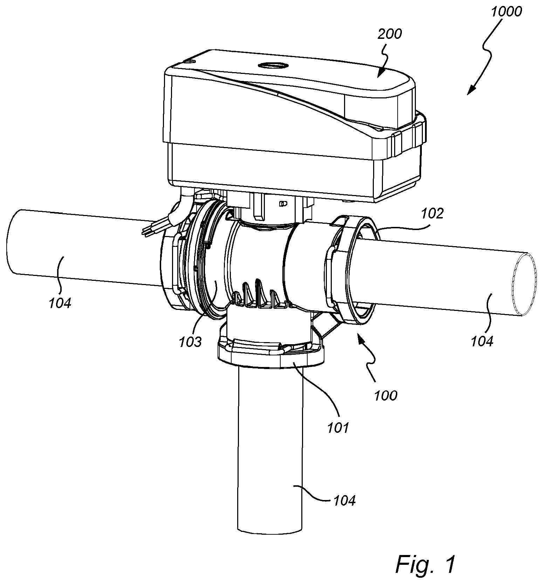

Starting with Fig. 1, a perspective view of one embodiment of a regulating valve arrangement 1000 according to the invention is disclosed. The regulating valve arrangement 1000 as such is of the well-known type which comprises a hollow housing 100 having an overall T-shape with one inlet port 101 in its lower end and two opposing outlet ports 102, 103. The housing 100 defines a non-disclosed internal fluid chamber which receives a non-disclosed ball-shaped obturator. Each port 101, 102, 103 lockingly engages a pipe 104 to thereby allow a fluid flow to flow into the fluid chamber via the inlet port 101 and then, depending on how the non-disclosed obturator is set, out from the housing 100 via one of the two outlet ports 102, 103. The disclosed regulating valve arrangement 1000 is connected to a motorized actuator 200 which is configured to operate the obturator. The skilled person realizes that the actuator 200 may be omitted and instead by replaced by a handle or the like for manual operation.

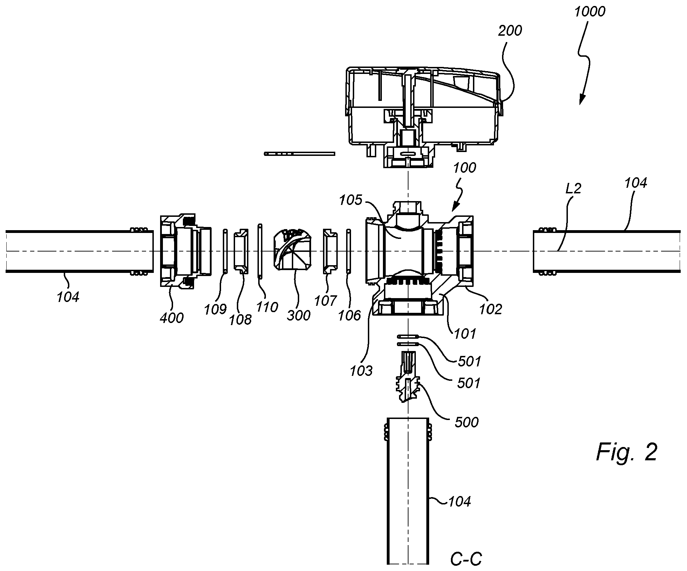

Now turning to Fig. 2, an exploded view of the regulating valve arrangement 1000 is disclosed to better describe its parts.

The regulating valve arrangement 1000 comprises the hollow housing 100 having an internal fluid chamber 105. The regulating valve arrangement 1000 additionally comprises an optional first O-ring 106, a first sealing member 107, a ball-shaped obturator 300, an optional third O-ring 110, a second sealing member 108, an optional second O-ring 109, and an adaptor 400.

Each port in the regulating valve arrangement is configured to receive a pipe 104. The pipes 104 are in the disclosed embodiment configured to be fixedly connected to the housing and/or adaptor by means of a non-disclosed clip in a manner which is well known in the art. The skilled person realizes that the pipes 104 alternatively may be connected by nuts which engage the housing and/or the adaptor by threading. The regulating valve arrangement 1000 further comprises a spindle 500 and two O-rings 501. The spindle 500 is configured to operatively interconnect the obturator 300 with the actuator 200.

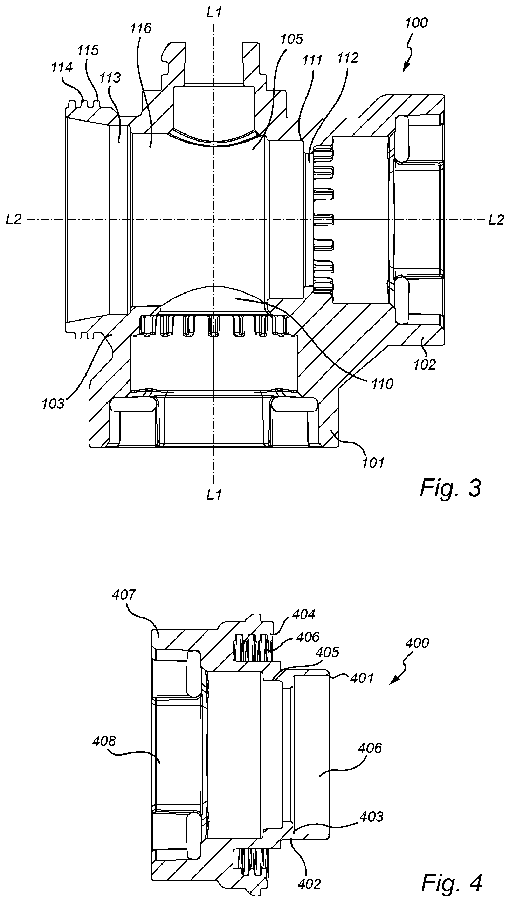

Now turning to Fig. 3, a cross section of the housing 100 is disclosed. The cross section is taken between the first outlet port 102 and the second outlet port 103 and along a longitudinal centre line L2 extending therethrough. The inlet port 101 extends concentrically with a rotation axis L1 of the obturator (the obturator is omitted in Fig. 3). The inlet port 101 surrounds an inlet opening 110. The first outlet port 102 comprises a first outlet seating 111 which surrounds a first outlet opening 112. The second outlet port 103 comprises a second outlet opening 113. The first and second outlet ports 102, 103 are linearly arranged and are hence arranged opposite each other. The thus formed three fluid channels 101, 102, 103 meet in the fluid chamber 105 which is configured to receive the obturator. The fluid chamber has an inner wall 116.

An outer envelope surface 114 of the second outlet port 103 is provided with threads 115 configured to lockingly engage with the adaptor 400 which will be discussed below.

The housing 100 is formed by a polymeric material and is preferably formed as a unitary body by injection moulding.

Now turning to Fig. 4, a cross section of one embodiment of the adaptor 400 is disclosed. The adaptor 400 comprises a first neck portion 401 configured to project into the second outlet port 103 of the housing 100 in a condition when the adaptor 400 is mounted to the housing 100. An inner end portion 402 of the first neck portion 401 comprises a circumferentially extending seating 403. The seating 403 surrounds an adaptor outlet opening 406 configured to communicate with the second outlet opening 113 of the housing 100.

Further, the adaptor 400 comprises a circumferentially extending flange 404 which defines a circumferentially extending gap between the flange 404 and the adaptor body 405. A circumferential inner surface of said flange 404 comprises a plurality of threads 406 which are configured to engage the complementary threads 115 on the outer envelope surface 114 of the second outlet port 103 of the housing 100.

The optional O-ring 110 disclosed in Fig. 2 is configured to sealingly engage an interface between the housing and the adaptor.

The adaptor 400 further comprises a second neck portion 407 having an insertion portion 408 which is configured to receive a tube (not disclosed) of a specific diameter to be connected to the regulation valve arrangement. The regulation valve arrangement may be supplied with two or more adaptors 400, each adaptor being configured to allow a tube of a specific diameter to be connected to the second neck portion. Thereby, the first and second outlet ports 102, 103 of the housing may easily be connected to tubes of different diameters at the user's choice and depending on the actual installation where the valve arrangement is intended to be used. The tube may be connected to the adaptor by using prior art technology, i.e. hair pins. The adaptor 400 is preferably made of a polymeric material.

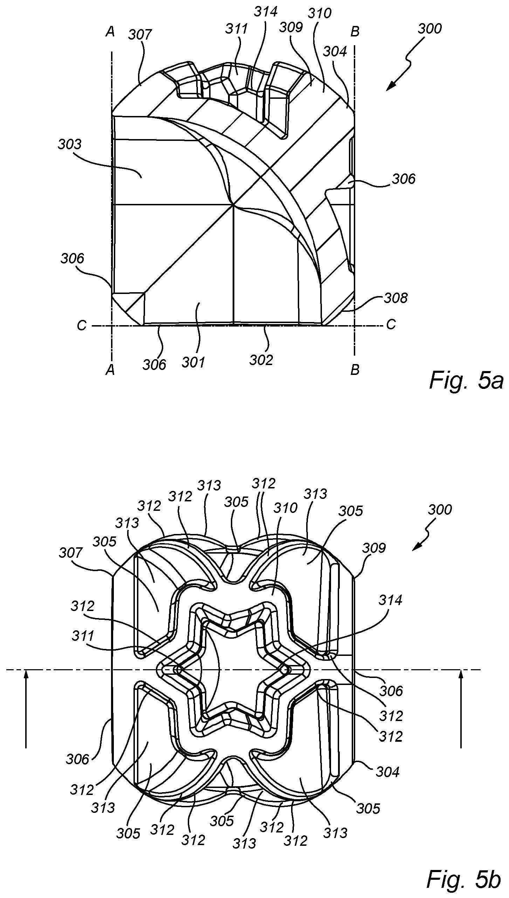

Now referring to Figs. 5a and 5b a cross-section and a top view of one embodiment of the obturator 300 is disclosed. The cross-section in Fig. 5a is taken along the intended rotational axis L1 of the obturator 300 and is also indicated in Fig. 5b. Fig. 5b is a top view of the obturator 300. As is best seen in Fig. 5a, the obturator 300 has an L-shaped fluid channel 301 which extends through the obturator 300 between an inlet opening portion 302 and an outlet opening portion 303. The two portions constitute in the specific embodiment of the obturator two separate openings. The obturator 300 is configured to be rotatable around the rotation axis L1 in relation to first and second valve sealing members 107, 108 which are arranged in the housing 100. During such rotation, the inlet opening 302 is configured to communicate with the inlet port 101 of the housing 100, while the outlet opening 303 is configured to selectively communicate with either the first or the second outlet openings 112, 113 in the housing 100 depending on how the ball-shaped obturator is rotated.

The obturator 300 has an overall ball-shape having an outer envelope surface 304 which virtually expands a sphere. Said outer envelope surface 304 forms sealing portions to be discussed below. The outer envelope surface 304 is discontinuous with a plurality of recesses 305. Further, the envelope surface 304 is provided with bevels 306 which extend across the inlet opening 302, across the outlet opening 303 and across a portion opposite the outlet opening 303. However, all sealing portions in the obturator 300 are formed by the spherical outer envelope surface 304 and do hence have a spheric extension.

The ball-shaped obturator 300 is preferably formed by injection moulding a polymeric material.

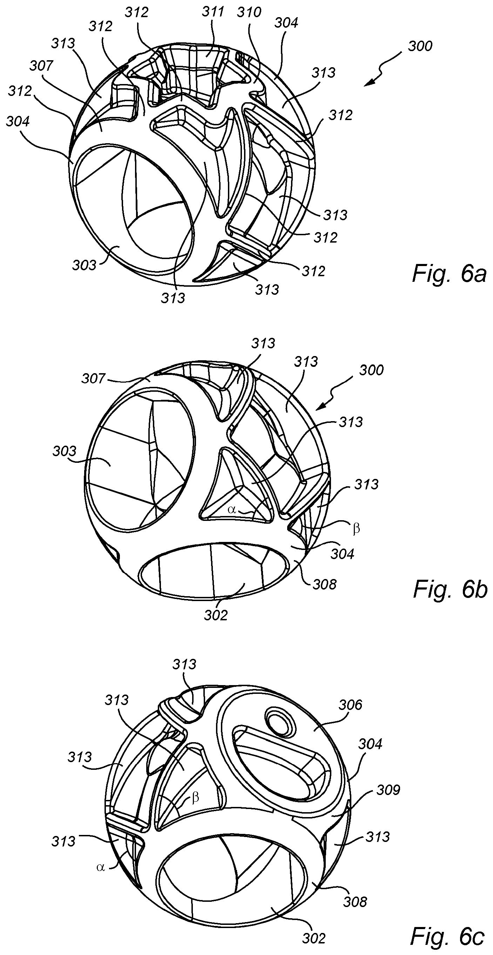

Now turning to Figs 6a-6c, three perspective views of the ball-shaped obturator 300 are disclosed. Fig 6a is a perspective view showing the top of the obturator 300 and the outlet opening 303. Fig 6b is a perspective view of the obturator 300 as seen from inlet opening 302 and its outlet opening 303. Fig 6c is a perspective view of the obturator 300 as seen from its inlet opening 302.

Turning to Fig. 6a, the obturator 300 comprises a first outlet sealing portion 307 which continuously encircles the outlet opening 303 of the obturator 300. The first outlet sealing portion 307 is configured to selectively sealingly abut either the first sealing member 107 or the second sealing member 108 which are arranged in the housing 100. The skilled person realizes that the sealing contact between the first outlet sealing portion 307 and the first and second sealing members 107, 108 during a given instance is determined by how the obturator 300 is rotated in view of the housing 100.

The first outlet sealing portion 307 is formed by the outer envelope surface 304 of the ball-shaped obturator 300. The first outlet sealing portion 307 is formed as a strip-shaped portion of the outer envelope surface 304 which extends in a virtual plane A, see Fig. 5a, having an extension in parallel with the rotational axis L1 of the ball-shaped obturator 300. Thus, the first outlet sealing portion 307 has along its outer envelope surface the same spherical extension as the outer envelope surface 304 of the ball-shaped obturator 300. The width of said first outlet sealing portion 307 is chosen to provide a leak-free sealing abutment between the first outlet sealing portion 307 and the first or the second sealing member 107, 108, depending on how the obturator is rotated in view of the housing 100. This will be described below.

Turning to Fig. 5a and 6b, the inlet opening 302 of the obturator 300 is concentric with the rotation axis L1. The obturator 300 comprises an inlet sealing portion 308 which continuously encircles the inlet opening 302 of the obturator 300. The inlet sealing portion 308 is formed by the outer envelope surface 304 of the obturator 300. The inlet sealing portion 308 is formed as a strip-shaped portion of the outer envelope surface 304 which extends in a virtual plane C having an extension transverse to the rotational axis L1 of the obturator 300, see Fig. 5a. Thus, the inlet sealing portion 308 has along its outer envelope surface the same spherical extension as the outer envelope surface 304 of the ball-shaped obturator 300. The width of said inlet sealing portion is chosen to provide a leak-free sealing abutment between the inlet sealing portion 308 and first and second sealing members 107, 108 to be arranged in the housing as will be described below.

Turning to Fig. 5a and 6c, the obturator 300 further comprises a second outlet sealing portion 309, which is arranged diametrically opposing the first outlet sealing portion 307. The second outlet sealing portion 309 allows a complete sealing-off of the second outlet port 103 in the housing 100 when the obturator 300 is set to allow a fluid flow from the inlet port 101 to the first outlet port 102, and correspondingly a complete sealing-off of the first outlet port 102 in the housing 100 when the obturator 300 is set to allow a fluid flow from the inlet port 101 to the second outlet port 103.

The second outlet sealing portion 309 is formed by the outer envelope surface 304 of the ball-shaped obturator 300. The second outlet sealing portion 309 is formed by a strip-shaped portion of the outer envelope surface 304 which extends in a virtual plane B, see Fig. 5a, having an extension in parallel with the rotational axis L1 of the obturator 300. Thus, the second outlet sealing portion 309 has along its outer envelope surface the same spherical extension as the outer envelope surface 304 of the ball-shaped obturator 300. The width of said second outlet sealing portion 309 is chosen to provide a leak-free sealing abutment between the second outlet sealing portion 309 and the first or the second sealing member 107, 108 in the housing 100, depending on how the obturator is rotated in view of the housing 100. This will be described below.

As is best seen in Figs 5a and 5c, the second outlet sealing portion 309 surrounds a closed wall portion of the obturator 300 and encircles a bevelled portion 306. The bevelled portion 306 may be provided with one or more optional recesses to save weight and material.

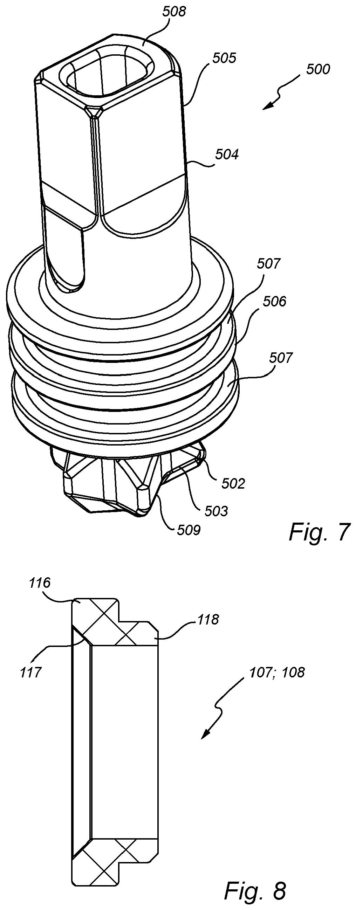

Turning to Figs. 5a, 5b and 6a, the obturator 300 further comprises an actuator sealing portion 310 in its outer envelope portion 304. The actuator sealing portion 310 is concentric with the rotation axis L1 and is arranged opposite the inlet sealing portion 308. The actuator sealing portion 310 comprises a Torx-shaped recess 311 which is configured to engage a complementary Torx-shaped profile 503 of a first end portion 502 of the spindle 500, see Fig. 7.

The outer envelope surface 304 of the obturator 300 comprises a web of sealing portions 312, see specifically Fig. 5b and 6a. The sealing portions 312 are configured to selectively sealingly abut the first sealing member 107 and/or the second sealing member 108 during rotation of the obturator 300.

The sealing portions 312 are in the disclosed embodiment arranged as strip-shaped portions where each support surface 312 merges with two of the sealing portions in the group consisting of the inlet sealing portion 308, the first and second outlet sealing portions 307, 309 and the actuator sealing portion 310. The web with its sealing portions 312 has along its outer envelope surface the same spherical extension as the outer envelope surface 304 of the ball-shaped obturator 300. Thereby a continuous seamless sealing surface is provided.

In the disclosed embodiment, the web of sealing portions 312 merges with the first outlet sealing portion 307 by forming a first angle α to the virtual plane C which extends perpendicular to the rotation axis L1 of the obturator 300. Also, the web of sealing portions 312 merge with the second outlet sealing portion 309 of the obturator 300 by forming a second angle β to the virtual plane C. The first and second angles α, β are preferably the same to thereby provide a symmetry. However, the skilled person realizes that the angel may be different. The angles α, β are preferably in the range of 30-60 degrees.

Also, in the disclosed embodiment of the obturator 300, the inlet sealing portion 308 merges, see Figs 6a-6c, with the first outlet sealing portion 307 and with the second outlet sealing portion 309. Further, the actuator sealing portion 310 merges with the first outlet sealing portion 307 and with the second outlet sealing portion 309. Thereby, all sealing portions together with the web of sealing portions 312 form a continuous virtually spherical sealing surface.

The web of sealing portions 312 defines a plurality of recesses 313 on the outer envelope surface 304 of the obturator 300. In the disclosed embodiment, the inlet sealing portion 308 and the first and second outlet sealing portions 307, 309 are all surrounded by four substantially triangular recesses 313. At least one recess 313 is defined at least partly by the web of sealing portions 312 and the first outlet sealing portion 307 and the inlet sealing portion 308. At least one recess 313 is defined at least partly by the web of sealing portions 312 and the second outlet sealing portion 309 and the inlet sealing portion 308. The skilled person realizes that the pattern of the web and the recesses may be varied within the scope of the invention.

Now turning to Fig. 7, one embodiment of the spindle 500 is disclosed. The spindle 500 comprises a longitudinally extended body configured to be received in the housing 100 coinciding with the rotational axis L1 of the obturator 300. The spindle 500 comprises a first end portion 502 having a Torx-shaped profile 503 which is configured to lockingly engage a complementary profile of the actuator sealing portion 310 of the obturator.

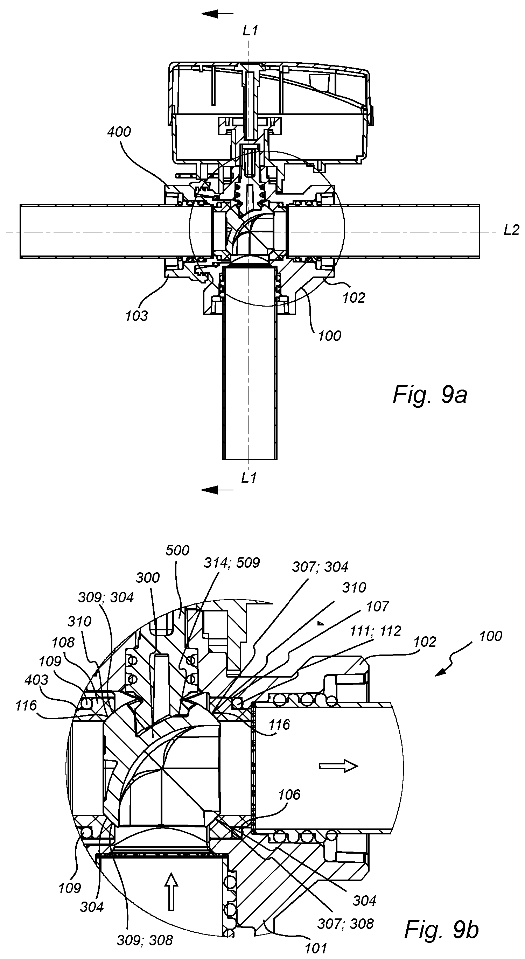

It is preferred that a free end 509 of the first end portion 502 of the spindle 500 has a geometry that is complementary to a bottom portion 314, see Fig. 5a, of the Torx-shaped recess 311 of the actuator sealing portion 310 of the obturator 300. In the disclosed embodiment, the interface between the free end 509 of the spindle 500 and the bottom portion 314 of the obturator 300 has a curved extension. This will be further discussed below with reference to Fig. 9b. It is to be understood that other non-rotation symmetrical geometries may be used.

The spindle 500 further comprises a second end portion 504 which is provided with a non-rotational symmetrical cross section 505 configured to engage a complementary profile in the actuator 200. In the disclosed embodiment, the cross section is substantially quadrangular cross section with one non-straight side portion 508. The non-rotational symmetrical cross section ensures that the actuator 200 will be arranged in a correct position in view of the valve arrangement.

The skilled person realizes that the cross-sectional profiles on the first and second end portions 502, 504 may have other shapes as long as they have a non-rotational symmetrical cross section.

A central portion 506 of the spindle 500 which is configured to extend through the fluid channel 105 the housing 100 is provided with two grooves 507. Each groove 507 is configured to receive a sealing O-ring 501, see Fig. 1. The spindle 500 is preferably formed by injection-moulding a polymeric material.

The skilled person realizes that the spindle 500 may be designed in a number of ways with remained function, and the disclosed embodiment is only one of many possible designs.

Now turning to Fig. 8, one embodiment of the first and the second sealing member 107, 108 is disclosed. The first and second sealing members 107, 108 are preferably identical. The sealing member 107, 108 is a ring-shaped member having a front end 116 configured to sealingly engage the obturator 300. The front end 116 has a valve sealing surface 117 which preferably has a spherical shape complementary to the shape of the outer envelope surface 304 of the obturator 300. The spherically shaped sealing surface 117 is configured to sealingly abut the obturator 300.

The sealing member 107, 108 further has a rear end 118. In the event the sealing member is configured to constitute the first sealing member 107 in the regulating valve arrangement 1000, the rear end 118 is configured to directly or indirectly abut the first outlet seating 111 in the housing 100. Alternatively, in the event the sealing member is configured to constitute the second sealing member 108, the rear end 118 is configured to directly or indirectly abut the seating 403 in the adaptor 400. An indirect abutment may be provided for by arranging an intermediate O-ring 106, 109 between the rear end 118 and the intended seating 111, 403. The rear end 118 is preferably provided with a shape complementary to the intended seating 111, 403. In the event the O-ring should be missing, the person that assembles the device will experience an axial play which provides a tactile feedback that the O-ring is missing.

The sealing member 107, 108 may be provided as a uniform body of one and the same flexible material. Alternatively, the sealing member 107, 108 may be formed of a two-component material with different portions having different elastic properties.

Now turning to Figs. 9a and 9b. Fig. 9a is a cross section of the regulating valve arrangement 1000 as seen along the longitudinal centreline L2 extending between the two opposing outlet ports 102, 103. Fig. 9b is a partial enlargement of the sealing engagement between the first sealing member 107 and the first outlet sealing portion 307 of the obturator 300. The obturator 300 is disclosed as being set to allow a fluid flow from the inlet port 101 to the first outlet port 102, see arrows.

In the assembled condition, the first sealing member 107 is received between the seating 111 encircling the first outlet opening 112 and the first outlet sealing portion 307 of the ball-shaped obturator 300. Also, the adaptor 400 is mounted to the second outlet port 103 of the housing 100. The second sealing member 108 is received between the seating 403 in the adaptor 400 and the second outlet sealing portion 309 of the obturator 300. In this mounted position, the adaptor 400 forces the first and second sealing members 107, 108 into a sealing engagement between the respective two sealing members 107, 108 and the first and second sealing portions 307, 309 which are formed by the outer envelope surface 304 of the obturator 300.

The sealing effect is enhanced by the front end 116 of the respective first and second sealing member 107, 109 having a curvature complementary to the spherical outer envelope surface 304 of the obturator 300.

As noted from the cross section in Fig. 9b, the first and second sealing members 107, 109 do additionally sealingly engage the inlet sealing portion 308 and the actuator sealing portion 310 as a consequence of these two sealing portions 308, 310 merging with the first and second outlet sealing portions 307, 309.

Should the obturator 300 instead be rotated 180 degrees around the rotation axis L1 of the obturator 300, into a position where a fluid flow instead is allowed from the inlet port 101 to the second inlet port 103, the skilled person realizes that the first outlet sealing member 107 will instead sealingly engage the second outlet sealing portion 309 of the obturator 300 and the second outlet sealing member 109 will sealingly engage the first outlet sealing portion 307 of the obturator 300. The first and second sealing members 107, 109 will also in this position additionally sealingly engage the inlet sealing portion 308 and the actuator sealing portion 310 as a consequence of these two sealing portions merging with the first and second outlet sealing portions 307, 309.

As is noted in Fig. 9b, one O-ring 106 is arranged between the seating 111 in the housing 100 and the first sealing member 107 and one O-ring 109 is arranged between the seating 403 in the adaptor 400 and the second sealing member 108. These optional O-rings may be used to further enhance the sealing abutment between the sealing members and the sealing portions of the obturator. Especially, the O-rings may be used to compensate for any dimensional tolerance errors which may occur during production. The skilled person realizes that the O-rings may be provided as separate items or be integrally formed in the sealing members, e.g. in the form of a two-component sealing.

In the event of O-rings, an indirect contact between the sealing members 107, 109 and their respective seatings 111, 403 is provided for.

As is best seen in Fig. 9b, and discussed above, the free end 509 of the first end portion 502 of the spindle 500 has a curved geometry that is complementary to the bottom portion 314 of the Torx-shaped recess 311 of the actuator sealing portion 310 of the obturator 300. As a result of this complementary shape, it is ensured that the spindle 500 always will be correctly oriented in view of the obturator 300. This in turn ensures that the outlet opening 303 of the obturator 300 always will be correctly mounted in view of the first and second outlet ports 102, 103 of the housing 100.

Further, by the complementary shape, a better load distribution is achieved between the spindle 500 and the obturator 300 during setting of the obturator by means of the actuator 200. A good load distribution is essential when the obturator and/or the spindle are made of a polymeric material.

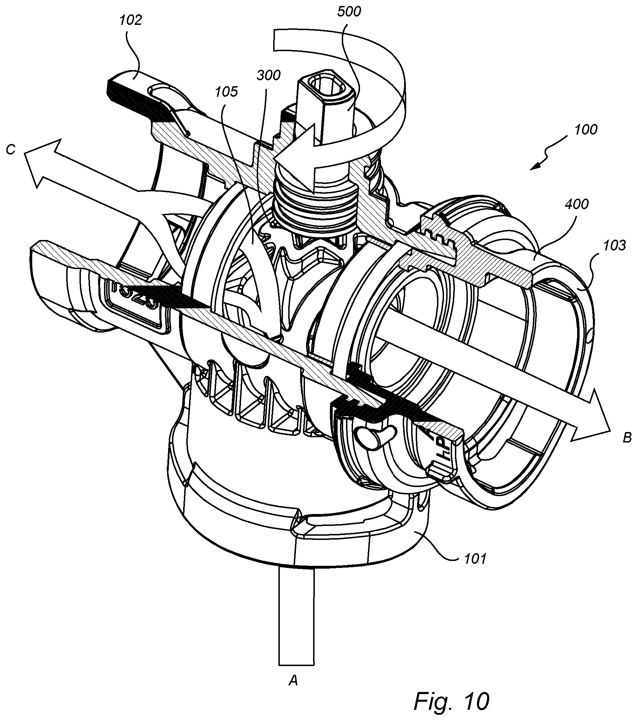

Now turning to Figs. 10 and Fig. 5b, the flow through the regulating valve during its use is schematically illustrated. A portion of the housing 100 and the adaptor 400 is removed to better illustrate the interior of the housing 100 with the fluid chamber 105 receiving the obturator 300. The obturator 300 is disclosed as being slightly rotated by the spindle 500 so that the first and second outlet sealing portions 307, 308 of the obturator 300 are slightly off-set in view of the first and second outlet openings in the housing 100. Further, the obturator 300 is rotated so that the major part B of the inlet fluid flow A that enters the housing via the inlet port 101 leaves the housing 100 via the second outlet port 103 on the right-hand side in the figure.

As a consequence of this slight off-set of the first and second outlet sealing portions 307, 308 of the obturator 300, an intermittent sealing surface is formed between the web of sealing portions 312 which extends over the outer envelope surface 304 of the of the obturator 300 and which merge with the first and second outlet sealing portions307, 308, the inlet sealing portion 308 and the actuator sealing portion 310 and the sealing members 107 and 109 which are arranged in the housing 100. This intermittent sealing surface results in that the major flow B is passed through the second outlet port 103 since this is the outlet opening having the largest cross-section. However, as a result of the intermittent contact surface, a secondary flow C, a leak flow, is allowed to take place in the interspace that is formed between the outer envelope surface 304 of the obturator 300 and an inner wall of the fluid chamber 105 in the housing 100. This leak flow contributes to a reduction of the inevitable pressure pulse which occurs when setting a regulating valve.

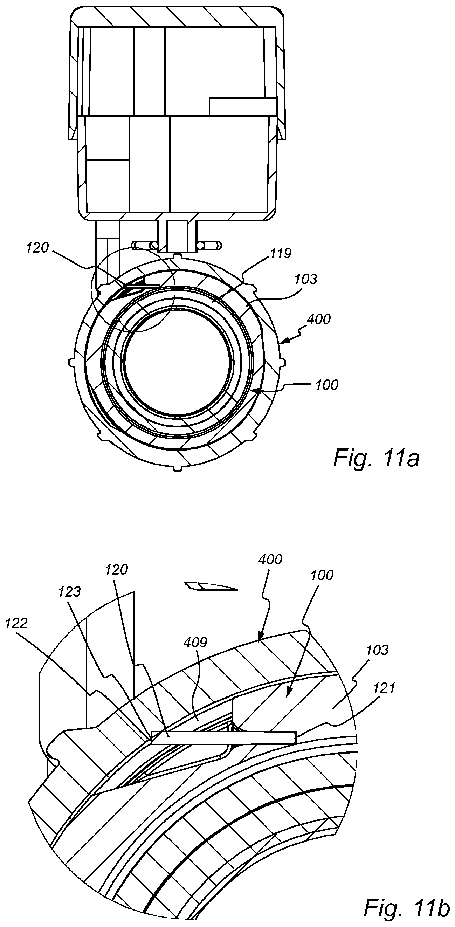

Now turning to Figs. 11a and 11b where Fig. 11b is a partial enlargement of the area with the pin. The second outlet port 103 of the housing 100 may in an inner wall portion 119 thereof be provided with a locking pin 120. The locking pin 120 has a first end 121 that is integrated with the material of the housing 100 and a second, free end 122 that projects outwardly in a non-radial direction. As the adaptor 400 is mounted, by threading, to the outlet port 103 of the housing, an outer edge 123 of the free end 122 of the locking pin 120 will follow an inner wall portion 409 of the adaptor 400. However, when instead trying to turn the adaptor 400 in the opposite direction to remove the same, the free end 122 of the locking pin 120 will instead serve as a stopper which physically engages the polymeric material in the inner wall portion 409 of the adaptor. This will prevent unintentional removal of the adaptor by providing a tactile, frictional resistance.

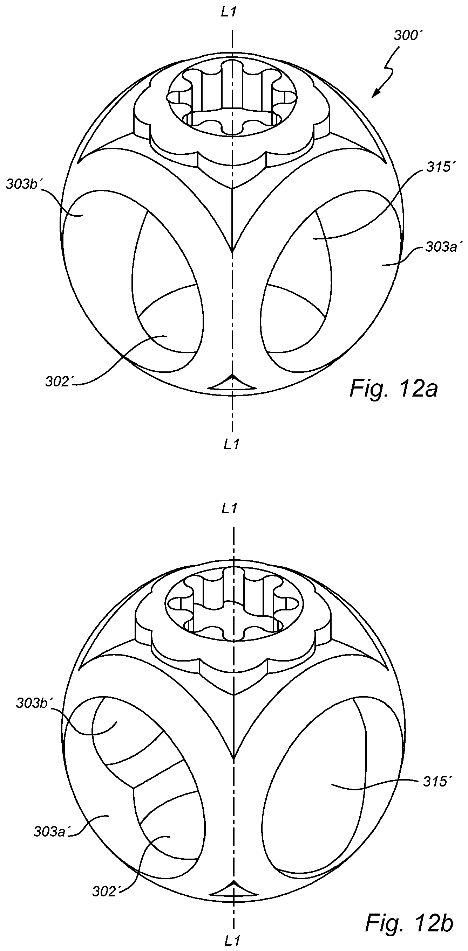

Now turning to Figs. 12a and 12b two different views of a second, alternative embodiment of an obturator 300' are disclosed

The obturator 300' differs from the previously described obturator 300 in that it instead of comprising one single outlet opening 303 comprises two outlet openings 303a' and 303b'. The two outlets openings 303a', 303b' are mutually offset 90 degrees to each other as seen along the rotation axis L1. Fig. 12a is a first perspective view disclosing the two outlet openings 303a', 303b' and the inlet opening 302'. Fig. 12b is a second perspective view with the obturator 300' being turned 90 degrees around the rotation axis L1. It is seen from these two views that the wall portion 315' opposite each outlet opening 303a', 303b' constitutes a closed wall. The obturator 300' is in all other aspects identical with the previously disclosed obturator 300.

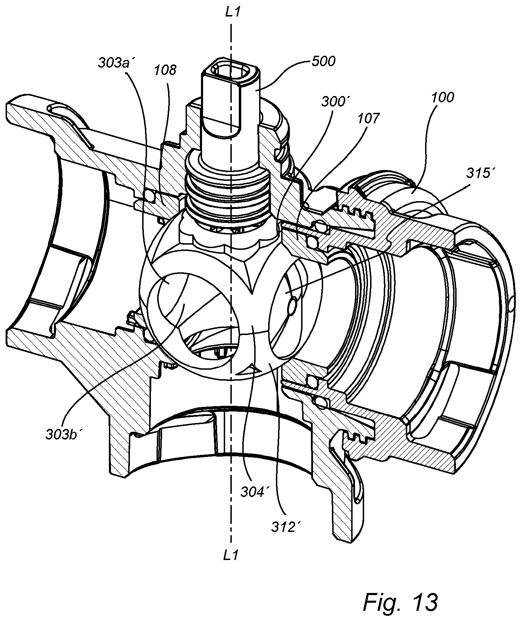

Now turning to Fig. 13, the alternative embodiment of the obturator 300' is disclosed as being arranged in a housing 100 and connected to a spindle 500. The housing 100 and the spindle 500 are identical with those previously discussed. As is clearly illustrated in this view, the outer envelope surface 304' of the obturator 300' forms a web of sealing portions 312' which are configured to selectively sealingly abut the first sealing member 107 and/or the second sealing member 108 during rotation of the obturator 300' in the housing 100.

By the obturator 300' comprising two outlet openings 303a' and 303b' which are mutually offset 90 degrees, a very fast regulation may be achieved since the obturator 300' only must be rotated 90 degrees around the rotation axis L1 to completely open or close an outlet port 102 103.

The skilled person realizes that the two outlet openings 303a', 303b' must not be mutually offset exactly 90 degrees. Other angles are possible with remained function. The offset may by way of example be within the range of 75-105 degrees. The skilled person realizes that the first and second outlet ports of the housing and hence the first and second outlet sealing portions with remained function must not be linearly arranged in view of each other but may form an angle to each other. In such event the relative position of the first and second outlet sealing portions in the obturator should be adjusted accordingly.

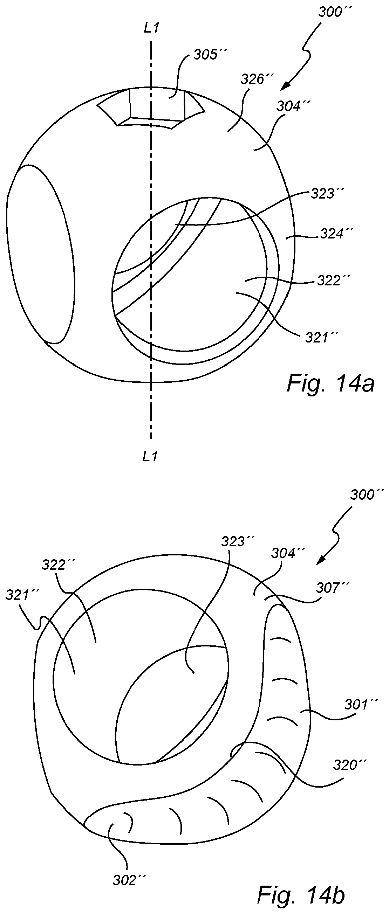

Now turning to Figs. 14a and 14b two different views of a third embodiment of an obturator 300" are disclosed. The obturator 300" differs from the previously described obturators 300, 300' in that the ball-shaped obturator 300" comprises a first fluid channel 301" in the form of a groove which extends along the outer envelope surface 304" of the obturator 300". The first fluid channel 301" has an extension between a first inlet opening portion 302" and a first outlet opening portion 303" thereof. Since the first fluid channel 301" is formed as a groove, it has an open and non-circular cross section as seen transverse to a longitudinal extension of the first fluid channel 301". In a condition when the obturator 300" is arranged in the housing 100, the envelope surface of the groove together with the inner wall 116 of the fluid chamber 105 of the housing 100 will form a fluid channel having a continuous, substantially leakage-free longitudinal extension. The first fluid channel 301" has a substantially L-shaped extension.

The first inlet opening portion 302" is concentric with the rotation axis L1 of the obturator 300".

A cross sectional area of the first inlet opening portion 302", as seen transverse to a longitudinal extension of the first fluid channel 301', equals, or is different from a cross sectional area of the first outlet opening portion 303". The cross-sectional area of the first outlet opening portion 303" may be smaller than the cross-sectional area of the first inlet opening portion 302". The cross-sectional area may decrease continuously as seen from first inlet opening portion 302" towards the first outlet opening portion 303". The depth of the groove forming the first fluid channel 301" may vary as seen along the longitudinal extension of the channel.

The obturator 300" comprises a second fluid channel 321". The second fluid channel 321" may be omitted. The second fluid channel 321" is disclosed as extending through the obturator 300" between a first opening 322" and a second opening 323". The second fluid channel 321" is configured to allow a fluid communication between the first and second outlet openings 112, 113 of the housing 100. The second fluid channel 321" may hence be seen as a by-pass channel allowing a fluid flow through the housing 100 that by-passes the inlet opening 110 of the housing 100. The skilled person realizes that depending on how the obturator 300" is set inside the housing 100, i.e. rotated around its rotation axis L1, the first opening 322" of the second fluid channel 321" may either serve as an inlet opening for the by-pass flow in the housing 100 or as an outlet opening. Correspondingly, the second opening 323" of the second fluid channel 321" may either serve as an inlet opening for the by-pass flow in the housing 100 or as an outlet opening.

The second fluid channel 332" has a substantially linear extension.

The outer envelope surface 304" of the obturator 300" is disclosed as having a continuous spherical extension. Thereby the outer envelope surface 304" forms a first sealing portion 307" which extends continuously along the edge 320" of the first fluid channel 301". Further, the outer envelope surface 304" forms a second sealing portion 324" which continuously encircles the first opening 322" of the second fluid channel 321". Additionally, the outer envelope surface 304" comprises a third sealing portion 325" which continuously encircles the second opening 323" of the second fluid channel 321".

The first outlet opening portion 303" of the first fluid channel 301", the first opening 322" of the second fluid channel 321" and the second opening 323" of the second fluid channel 321" are mutually offset 75-105 degrees and more preferred 90 degrees, as seen around the rotation axis L1. Thereby a very fast regulation may be achieved since the obturator 300" only must be rotated 90 degrees around the rotation axis L1 to completely open or close an outlet port 102, 103 of the housing 100. The skilled person realizes that the three outlet openings 303", 322", 323" must not be mutually offset exactly 90 degrees. Other angles are possible with remained function. The offset may by way of example be within the range of 75-105 degrees. Further, the the skilled person realizes that the first and second outlet ports 102, 103 of the housing 100 with remained function must not be linearly arranged in view of each other but may form an angle to each other. In such event the relative position of the openings 322", 323" of the second fluid channel 321" in the obturator 300" and their respective sealing portions 324", 325" should be adjusted accordingly.

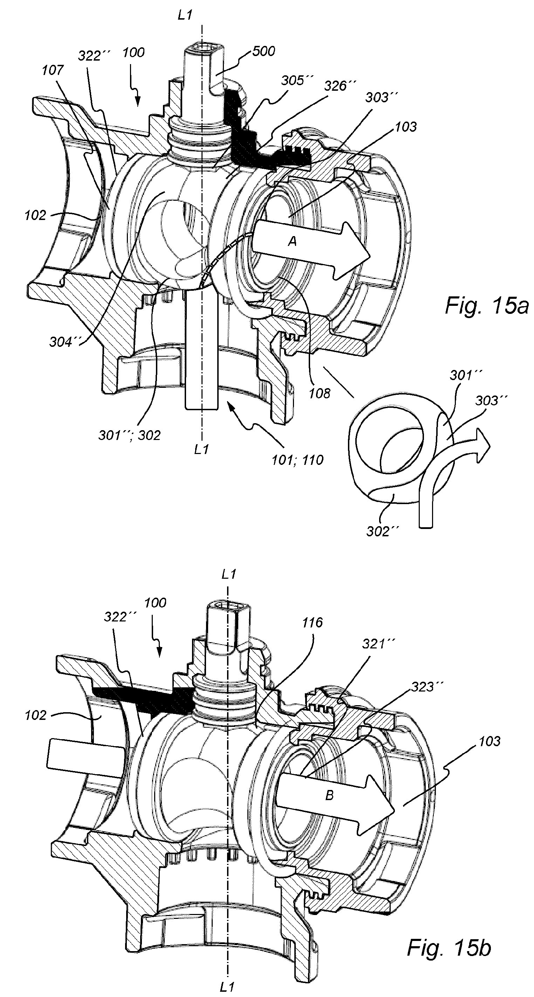

Now turning to Fig. 15a, the second alternative embodiment of the obturator 300" is disclosed as being arranged in a housing 100 and connected to a spindle 500. The housing 100 and the spindle 500 are identical with those previously discussed. The spindle 500 connects to the obturator 300" via a Torx-shaped profile 305" encircled by an actuator sealing portion 326". The engagement between the spindle 500 and the obturator 300" is the same as previously described in view of the first and second embodiments of the obturator 300, 300'.

As is clearly illustrated in this view, the outer envelope surface 304" of the obturator 300' forms a continuous sealing surface which is configured to selectively sealingly abut the first sealing member 107 and/or the second sealing member 108 of the housing 100 during rotation of the obturator 300".

The obturator 300" is configured to be set between a first and a second position by rotating the same around the rotation axis L1 by using the spindle 500. In the first position, see Fig. 15a, the first fluid channel 301" is oriented in view of the housing 100 so that the outlet portion 303" of the first fluid channel 301" is arranged in communication with the second outlet port 103 of the housing. If turned another 180 degrees (not illustrated), the outlet portion 303" of the first fluid channel 301" will instead be arranged in communication with the first outlet port 102 of the housing 100. When set in this first position, the outer envelope surface 304" of the obturator 300" will at the same time close the other of the first and second outlet ports 102, 103. Thus, when set in the first position, a fluid flow, see arrow A, will be allowed through the housing 100 between the inlet port 101 and one of the two outlet ports 102, 103. The fluid will pass in the interface between the envelope surface of the first fluid channel 301" and the inner wall 116 of the fluid chamber 105 of the housing 100. Since the first fluid channel 301" is formed as a groove in the envelope surface 304", the fluid flow will accordingly pass on the exterior side of the obturator 300".

In the second position, see Fig. 15b, the first fluid channel 301" is oriented in view of the housing 100 so that the outlet opening portion of the first fluid channel 301" is facing the inner wall 116 of the housing 100, thereby closing-off the first fluid channel 301". Further, the second fluid channel 321" is oriented in view of the housing 100 so that its first and second openings 322", 323" are in communication with the first and second outlet ports 102, 103 respectively of the housing 100. Thus, when set in the second position, a by-passing fluid flow, see arrow B, will be allowed through the housing 100 between the two outlet ports 102, 103, while at the same time no fluid flow is allowed into the housing 100 via the inlet port 101.

By the first outlet opening portion 303" of the first fluid channel 301", the first opening 322" of the second fluid channel 321", and the second opening 323" of the second fluid channel 321" being mutually offset 90 degrees, as seen around the rotation axis L1, a very fast regulation may be achieved since the obturator 300" only must be rotated 90 degrees around the rotation axis L1 to completely open or close an outlet port 102, 103. The skilled person realizes that the three outlet openings 303", 322" and 323" must not be mutually offset exactly 90 degrees. Other angles are possible with remained function. The offset may by way of example be within the range of 75-105 degrees.

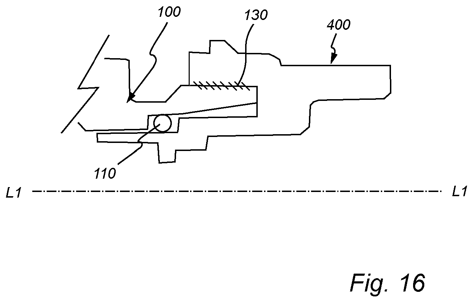

Now turning to Fig. 16 an alternative embodiment of mounting the adaptor 400 to the housing 100 is disclosed. Instead of mounting the adaptor 400 to the housing 100 by threading and also using a supplementary locking pin 120 as is disclosed in Figs. 11a and 11b, the adaptor 400 may instead be bonded 130 or welded to the housing 100. This is highly schematically disclosed in Fig. 16. An O-ring 110 is preferably arranged in the interface between the housing 100 and the adaptor 400 to separate the wet side of the regulating valve arrangement from the dry side. Thereby the O-ring 110 prevents fluid and internal pressure from reaching the bonded surface 130. The bonding 130 may by way of example be made by adhesive or by ultrasonic welding.

## Claims

1. A regulating valve arrangement (1000), comprising:
an internally hollow housing (100) made of a polymeric material comprising an inlet port (101) surrounding an inlet opening (110), a first outlet port (102) comprising a first outlet seating (111) surrounding a first outlet opening (112) and a second outlet port (103) having a second outlet opening (113);
a first sealing member (107) configured to directly or indirectly abut the first outlet seating (111); and
a ball-shaped obturator (300; 300'; 300") made of a polymeric material having a first fluid channel (301, 301', 301") extending between an inlet opening portion (302; 302'; 302") and an outlet opening portion (303; 303a', 303b'; 303") thereof, the obturator (300; 300'; 300") being rotatable in relation to the first sealing member (107), said inlet opening portion (302; 302'; 302") being configured to communicate with the inlet port (101) of the housing (100) and said outlet opening portion (303; 303a', 303b'; 303") being configured to selectively communicate with the first outlet opening (112) in the housing (100) by rotating the obturator (300; 300'; 300"); wherein
the ball-shaped obturator (300; 300'; 300") comprises a first outlet sealing portion (307; 307") in an outer envelope surface (304; 304') thereof which partly or fully encircles the outlet opening portion (303; 303a', 303b'; 303") of the obturator (300; 300'; 300"), said first outlet sealing portion (307; 307") being configured to selectively sealingly abut the first sealing member (107); wherein the outer envelope surface (304; 304') of the ball-shaped obturator (300; 300') comprises a web of sealing portions (312; 312') defining a plurality of recesses (313) in the outer envelope surface (304; 304'), wherein the plurality of recesses (313) allow a first fluid flow through the fluid channel (301) in the obturator (300; 300') from the inlet (101) to the first outlet opening (112) in the housing (100), and a second fluid flow from the inlet (101) to the second outlet opening (113) in the housing (100) via an interspace which is formed between the outer envelope surface (304; 304') of the obturator (300; 300') and an inner wall (116) of the housing (100), said first and second fluid flows being allowed during an intermediate obturator position being present when rotating the obturator (300; 300') from an obturator position in which the first outlet opening (112) is fully opened and the second outlet opening (113) is fully closed, to an obturator position in which the first outlet opening (112) to an obturator position in which the first outlet opening (112) is fully closed and the second outlet opening (113) is fully opened;
the regulating valve arrangement (1000) further comprises:
an adaptor (400) configured to be mounted to the second outlet port (103) of the housing (100), said adaptor (400) comprising a second outlet seating (403) surrounding an adaptor outlet opening (406) configured to communicate with the second outlet opening (113) of the housing (100); and
a second sealing member (108) configured to directly or indirectly abut the second outlet seating (403); and wherein
the first outlet sealing portion (307; 307") of the ball-shaped obturator (300; 300'; 300") is configured to selectively, by rotating the obturator (300; 300'; 300"), sealingly abut the second sealing member (108).

2. The regulating valve arrangement according to claim 1, wherein the ball-shaped obturator (300; 300') in an outer envelope surface (304; 304') thereof further comprises a second outlet sealing portion (309) arranged diametrically opposing the first outlet sealing portion (307).

3. The regulating valve arrangement according to claim 1 or 2, wherein the ball-shaped obturator (300; 300') in an outer envelope surface (304; 304') thereof further comprises an inlet sealing portion (308), the inlet sealing portion (308) being arranged to concentrically at least partly encircle the inlet opening (110) of the housing (100); and an actuator sealing portion (310), the actuator sealing portion being concentric with the rotation axis L1 of the obturator (300; 300') and being arranged opposite the inlet sealing portion (308).

4. The regulating valve arrangement according to claim 2 or claim 2 and 3,
wherein the second outlet sealing portion (309) of the ball-shaped obturator (300; 300') is configured to sealingly abut the second sealing member (108) in a condition when the ball-shaped obturator (300) is rotated into a position where the first outlet sealing portion (307) sealingly abuts the first sealing member (107), thereby allowing a fluid flow through the housing (100) and the fluid channel (301) in the obturator (300; 300') from the inlet port (101) to the first outlet port (102); and wherein
the second outlet sealing portion (309) of the ball-shaped obturator (300; 300') is configured to sealingly abut the first sealing member (107) in a condition when the ball-shaped obturator (300; 300') is rotated into a position where the first outlet sealing portion (307) sealingly abuts the second sealing member (108), thereby allowing a fluid flow through the housing (100) and the fluid channel (301) in the obturator (300; 300') from the inlet port (101) to the second outlet port (103).

5. The regulating valve arrangement according to any of claims 1-4, wherein the adaptor (400) is configured to directly, or indirectly, force the second sealing member (108) and the first sealing member (107) to sealingly abut the outer envelope surface (304; 304'; 304") of the obturator (300; 300'; 300").

6. The regulating valve arrangement according to any of claims 1-5, wherein the ball-shaped obturator (300; 300') in an outer envelope surface (304; 304') thereof comprises a web of sealing portions (312; 312') configured to selectively sealingly abut the first sealing member (107) and the second sealing member (108) during rotation of the obturator (300; 300'); and wherein
the web of sealing portions (312; 312') merges with the first outlet sealing portion (307), the second outlet sealing portion (309), the inlet sealing portion (308) and the actuator sealing portion (310) of the obturator (300; 300'), thereby forming a continuous virtually spherical sealing surface.

7. The regulating valve arrangement according to any of the preceding claims,
wherein at least one recess (313) in the outer envelope surface (304; 304') of the ball-shaped obturator (300; 300') is defined at least partly by the web of sealing portions (312; 312') and the first outlet sealing portion (307) and the inlet sealing portion (308) or the actuator sealing portion (310); and
wherein at least one recess (313) in the outer envelope surface (304; 304') of the ball-shaped obturator (300; 300') is defined at least partly by the web of sealing portions (312; 312') and the second outlet sealing portion (309) and the inlet sealing portion (308) or the actuator sealing portion (310).

8. The regulating valve arrangement according to any of the preceding claims, further comprising a spindle (500), said spindle (500) comprising a non-rotation symmetrical first end portion (502) that is configured to lockingly engage a complementary recess (311) of an actuator sealing portion (310) of the obturator 300, and wherein a free end (509) of the first end portion (502) of the spindle (500) is provided with a non-rotation symmetrical geometry that is complementary to a bottom portion (314) of the recess (311) of the obturator (300; 300').

9. The regulating valve according to claim 1, wherein the
fluid channel is a first fluid channel (301") in the form of a groove which extends along the outer envelope surface (304") of the obturator (300") between a first inlet opening portion (302") and a first outlet opening portion (303") of the first fluid channel (301"); and
wherein the first sealing portion (307") extends continuously along an edge (320") of the first fluid channel (301") of the obturator (300").

10. The regulating valve according to claim 9, wherein the ball-shaped obturator (300") further comprises a second fluid channel (321") which extends through the obturator (300") between a first opening (322") and a second opening (323"); and
wherein the outer envelope surface (304") comprises a second sealing portion (324") continuously encircling the first opening (322") of the second fluid channel (321") and a third sealing portion (325") continuously encircling the second opening (323") of the second fluid channel (321"); and
wherein the second and third sealing portions (324", 325") encircling the openings of the second fluid channel (321") are configured to selectively sealingly abut the first and second sealing members (107, 108) of the housing (100) by rotating the obturator (300").

## Patentansprüche

1. Regelventilanordnung (1000), die Folgendes umfasst:
ein innen hohles Gehäuse (100), das aus einem Polymerwerkstoff hergestellt ist, umfassend einen Einlassanschluss (101), der eine Einlassöffnung (110) umgibt, einen ersten Auslassanschluss (102), der eine erste Auslasssitzfläche (111) umfasst, die eine erste Auslassöffnung (112) umgibt, und einen zweiten Auslassanschluss (103), der eine zweite Auslassöffnung (113) aufweist,
ein erstes Abdichtungselement (107), das dafür konfiguriert ist, direkt oder indirekt an die erste Auslasssitzfläche (111) anzustoßen, und
ein kugelförmiges Absperrorgan (300; 300'; 300"), das aus einem Polymerwerkstoff hergestellt ist, wobei es einen ersten Fluidkanal (301; 301'; 301") aufweist, der sich zwischen einem Einlassöffnungsabschnitt (302; 302'; 302") und einem Auslassöffnungsabschnitt (303; 303a'; 303b'; 303) desselben erstreckt, wobei das Absperrorgan (300; 300'; 300") im Verhältnis zu dem ersten Abdichtungselement (107) drehbar ist, der Einlassöffnungsabschnitt (302; 302'; 302") dafür konfiguriert ist, sich mit dem Einlassanschluss (101) des Gehäuses (100) in Verbindung zu setzen, und der Auslassöffnungsanschluss (303; 303a'; 303b';303") dafür konfiguriert ist, sich durch Drehen des Absperrorgans (300; 300'; 300") selektiv mit der ersten Auslassöffnung (112) in dem Gehäuse (100) in Verbindung zu setzen, wobei
das kugelförmige Absperrorgan (300; 300'; 300") in einer äußeren Umhüllungsfläche (304; 304") desselben einen ersten Auslassabdichtungsabschnitt (307; 307")umfasst, der den Auslassöffnungsabschnitt (303; 303a'; 303b'; 303") des Absperrorgans (300; 300'; 300") teilweise oder vollständig umschließt, wobei der erste Auslassabdichtungsabschnitt (307; 307") dafür konfiguriert ist, selektiv abdichtend an das erste Abdichtungselement (107) anzustoßen, wobei die äußere Umhüllungsfläche (304; 304") des kugelförmigen Absperrorgans (300; 300') ein Netz von Abdichtungsabschnitten (312; 312') umfasst, die eine Vielzahl von Aussparungen (313) in der äußeren Umhüllungsfläche (304; 304") definieren, wobei die Vielzahl von Aussparungen (313) einen ersten Fluidstrom durch den Fluidkanal (301) in dem Absperrorgan (300; 300') von dem Einlass (101) zu der ersten Auslassöffnung (112) in dem Gehäuse (100) und einen zweiten Fluidstrom von dem Einlass (101) zu der zweiten Auslassöffnung (113) in dem Gehäuse (100) über einen Zwischenraum, der zwischen der äußeren Umhüllungsfläche (304; 304") des Absperrorgans (300; 300') und einer Innenwand (116) des Gehäuses (100) geformt ist, ermöglicht, wobei der erste und der zweite Fluidstrom während einer Absperrorganzwischenposition ermöglicht werden, die vorhanden ist beim Drehen des Absperrorgans (300; 300') von einer Absperrorganposition, in der die erste Auslassöffnung (112) vollständig geöffnet ist und die zweite Auslassöffnung (113) vollständig geschlossen ist, zu einer Absperrorganposition, in der die erste Auslassöffnung (112) vollständig geschlossen ist und die zweite Auslassöffnung (113) vollständig geöffnet ist,
die Regelventilanordnung (1000) ferner Folgendes umfasst:
einen Adapter (400), der dafür konfiguriert ist, an dem zweiten Auslassanschluss (103) des Gehäuses (100) angebracht zu werden, wobei der Adapter (400) eine zweite Auslasssitzfläche (403) umfasst, die eine Adapterauslassöffnung (406) umgibt, die dafür konfiguriert ist, sich mit der zweiten Auslassöffnung (113) des Gehäuses (100) in Verbindung zu setzen, und
ein zweites Abdichtungselement (108), das dafür konfiguriert ist, direkt oder indirekt an die zweite Auslasssitzfläche (403) anzustoßen, und wobei
der erste Auslassabdichtungsabschnitt (307; 307") des kugelförmigen Absperrorgans (300; 300'; 300") dafür konfiguriert ist, selektiv, durch Drehen des Absperrorgans (300; 300'; 300"), abdichtend an das zweite Abdichtungselement (108) anzustoßen.

2. Regelventilanordnung nach Anspruch 1, wobei das kugelförmige Absperrorgan (300; 300') in einer äußeren Umhüllungsfläche (304; 304') desselben ferner einen zweiten Auslassabdichtungsabschnitt (309) umfasst, der diametral gegenüberliegend zu dem ersten Auslassabdichtungsabschnitt (307) angeordnet ist.

3. Regelventilanordnung nach Anspruch 1 oder 2, wobei das kugelförmige Absperrorgan (300; 300') in einer äußeren Umhüllungsfläche (304; 304') desselben ferner einen Einlassabdichtungsabschnitt (308), wobei der Einlassabdichtungsabschnitt (308) so angeordnet ist, dass er konzentrisch zumindest teilweise die Einlassöffnung (110) des Gehäuses (100) umschließt, und einen Stellantriebsabdichtungsabschnitt (310) umfasst, wobei der Stellantriebsabdichtungsabschnitt konzentrisch mit der Rotationsachse L1 des Absperrorgans (300; 300') ist und gegenüber dem Einlassabdichtungsabschnitt (308) angeordnet ist.

4. Regelventilanordnung nach Anspruch 2 oder Anspruch 2 und 3, wobei der zweite Auslassabdichtungsabschnitt (309) des kugelförmigen Absperrorgans (300; 300') dafür konfiguriert ist, in einem Zustand, wenn das kugelförmige Absperrorgan (300) in eine Position gedreht ist, in welcher der erste Auslassabdichtungsabschnitt (307) abdichtend an das erste Abdichtungselement (107) anstößt, abdichtend an das zweite Abdichtungselement (108) anzustoßen, wodurch ein Fluidstrom durch das Gehäuse (100) und den Fluidkanal (301) in dem Absperrorgan (300; 300') von dem Einlassanschluss (101) zu dem ersten Auslassanschluss (102) ermöglicht wird, und wobei
der zweite Auslassabdichtungsabschnitt (309) des kugelförmigen Absperrorgans (300; 300') dafür konfiguriert ist, in einem Zustand, wenn das kugelförmige Absperrorgan (300; 300') in eine Position gedreht ist, in welcher der erste Auslassabdichtungsabschnitt (307) abdichtend an das zweite Abdichtungselement (108) anstößt, abdichtend an das erste Abdichtungselement (107) anzustoßen, wodurch ein Fluidstrom durch das Gehäuse (100) und den Fluidkanal (301) in dem Absperrorgan (300; 300') von dem Einlassanschluss (101) zu dem zweiten Auslassanschluss (103) ermöglicht wird.

5. Regelventilanordnung nach einem der Ansprüche 1 bis 4, wobei der Adapter (400) dafür konfiguriert ist, direkt oder indirekt, das zweite Abdichtungselement (108) und das erste Abdichtungselement (107) zu zwingen, abdichtend an die äußere Umhüllungsfläche (304; 304'; 304") des Absperrorgans (300; 300'; 300") anzustoßen.

6. Regelventilanordnung nach einem der Ansprüche 1 bis 5, wobei das kugelförmige Absperrorgan (300; 300') in einer äußeren Umhüllungsfläche (304; 304') desselben ein Netz von Abdichtungsabschnitten (312; 312') umfasst, die dafür konfiguriert sind, während einer Drehung des Absperrorgans (300; 300') selektiv abdichtend an das erste Abdichtungselement (107) und das zweite Abdichtungselement (108) anzustoßen, und wobei
das Netz von Abdichtungsabschnitten (312; 312') mit dem ersten Auslassabdichtungsabschnitt (307), dem zweiten Auslassabdichtungsabschnitt (309), dem Einlassabdichtungsabschnitt (308) und dem Stellantriebsabdichtungsabschnitt (310) des Absperrorgans (300; 300') verschmilzt, wodurch eine durchgehende virtuell sphärische Abdichtungsfläche gebildet wird.

7. Regelventilanordnung nach einem der vorhergehenden Ansprüche, wobei mindestens eine Aussparung (313) in der äußeren Umhüllungsfläche (304; 304") des kugelförmigen Absperrorgans (300; 300') zumindest teilweise durch das Netz von Abdichtungsabschnitten (312; 312') und den ersten Auslassabdichtungsabschnitt (307) und den Einlassabdichtungsabschnitt (308) oder den Stellantriebsabdichtungsabschnitt (310) definiert wird und
wobei mindestens eine Aussparung (313) in der äußeren Umhüllungsfläche (304; 304") des kugelförmigen Absperrorgans (300; 300') zumindest teilweise durch das Netz von Abdichtungsabschnitten (312; 312') und den zweiten Auslassabdichtungsabschnitt (309) und den Einlassabdichtungsabschnitt (308) oder den Stellantriebsabdichtungsabschnitt (310) definiert wird.

8. Regelventilanordnung nach einem der vorhergehenden Ansprüche, die ferner eine Spindel (500) umfasst, wobei die Spindel (500) einen nicht-rotationssymmetrischen ersten Endabschnitt (502) umfasst, der dafür konfiguriert ist, verriegelnd eine komplementäre Aussparung (311) eines Stellantriebsabdichtungsabschnitts (310) des Absperrorgans (300) in Eingriff zu nehmen, und wobei ein freies Ende (509) des ersten Endabschnitts (502) der Spindel (500) mit einer nicht-rotationssymmetrischen Geometrie versehen ist, die komplementär zu einem Bodenabschnitt (314) der Aussparung (311) des Absperrorgans (300; 300') ist.

9. Regelventil nach Anspruch 1, wobei der Fluidkanal ein erster Fluidkanal (301") in der Form einer Rille ist, die sich entlang der äußeren Umhüllungsfläche (304") des Absperrorgans (300") zwischen einem ersten Einlassöffnungsabschnitt (302") und einem ersten Auslassöffnungsabschnitt (303") des ersten Fluidkanals (301") erstreckt, und
wobei sich der erste Abdichtungsabschnitt (307") durchgehend entlang einer Kante (320") des ersten Fluidkanals (301") des Absperrorgans (300") erstreckt.

10. Regelventil nach Anspruch 9, wobei das kugelförmige Absperrorgan (300") ferner einen zweiten Fluidkanal (321") umfasst, der sich durch das Absperrorgan (300") zwischen einer ersten Öffnung (322") und einer zweiten Öffnung (323") erstreckt, und
wobei die äußere Umhüllungsfläche (304") einen zweiten Abdichtungsabschnitt (324"), der die erste Öffnung (322") des zweiten Fluidkanals (321") durchgehend umschließt, und einen dritten Abdichtungsabschnitt (325"), der die zweite Öffnung (323") des zweiten Fluidkanals (321") durchgehend umschließt, umfasst und
wobei der zweite und der dritte Abdichtungsabschnitt (324", 325"), welche die Öffnungen des zweiten Fluidkanals (321") umschließen, dafür konfiguriert sind, durch Drehen des Absperrorgans (300") selektiv an das erste und das zweite Abdichtungselement (107, 108) des Gehäuses (100) anzustoßen.

## Revendications

1. Ensemble de soupape de régulation (1000), comprenant :
un boîtier (100) creux intérieurement constitué d'un matériau polymère, comprenant un orifice d'entrée (101) entourant une ouverture d'entrée (110), un premier orifice de sortie (102) comprenant un premier siège de sortie (111) entourant une première ouverture de sortie (112), et un deuxième orifice de sortie (103) comportant une deuxième ouverture de sortie (113) ;
un premier élément d'étanchéité (107) configuré pour venir en appui directement ou indirectement sur le premier siège de sortie (111) ; et
un obturateur sphérique (300 ; 300' ; 300") constitué d'un matériau polymère, présentant un premier canal de fluide (301, 301', 301") s'étendant entre une partie d'ouverture d'entrée (302 ; 302' ; 302") et une partie d'ouverture de sortie (303 ; 303a' ; 303b' ; 303") de celui-ci, l'obturateur (300 ; 300' ; 300") pouvant tourner par rapport au premier élément d'étanchéité (107), ladite partie d'ouverture d'entrée (302 ; 302' ; 302") étant configurée pour communiquer avec l'orifice d'entrée (101) du boîtier (100), et ladite partie d'ouverture de sortie (303 ; 303a' ; 303b' ; 303") étant configurée pour communiquer sélectivement avec la première ouverture de sortie (112) dans le boîtier (100) par rotation de l'obturateur (300 ; 300' ; 300") ; dans lequel
l'obturateur sphérique (300 ; 300' ; 300") comprend une première partie d'étanchéité de sortie (307 ; 307") dans une surface d'enveloppe extérieure (304 ; 304') de celui-ci, laquelle encercle partiellement ou entièrement la partie d'ouverture de sortie (303 ; 303a' ; 303b' ; 303") de l'obturateur (300 ; 300' ; 300"), ladite première partie d'étanchéité de sortie (307 ; 307") étant configurée pour venir sélectivement en appui étanche sur le premier élément d'étanchéité (107) ; dans lequel la surface d'enveloppe extérieure (304 ; 304') de l'obturateur sphérique (300 ; 300') comprend un réseau de parties d'étanchéité (312 ; 312') définissant une pluralité d'évidements (313) dans la surface d'enveloppe extérieure (304 ; 304'), dans lequel la pluralité d'évidements (313) permettent un premier écoulement de fluide à travers le canal de fluide (301) dans l'obturateur (300 ; 300'), depuis l'entrée (101) jusqu'à la première ouverture de sortie (112) dans le boîtier (100), ainsi qu'un deuxième écoulement de fluide depuis l'entrée (101) jusqu'à la deuxième ouverture de sortie (113) dans le boîtier (100) via un espace intermédiaire formé entre la surface d'enveloppe extérieure (304 ; 304') de l'obturateur (300 ; 300') et une paroi intérieure (116) du boîtier (100), lesdits premier et deuxième écoulements de fluide étant possibles lorsque l'obturateur (300 ; 300') se trouve dans une position intermédiaire pendant sa rotation depuis une position d'obturateur dans laquelle la première ouverture de sortie (112) est entièrement ouverte et la deuxième ouverture de sortie (113) est entièrement fermée, vers une position d'obturateur dans laquelle la première ouverture de sortie (112) est entièrement fermée et la deuxième ouverture de sortie (113) est entièrement ouverte ;
l'ensemble de soupape de régulation (1000) comprend en outre :
un adaptateur (400) configuré pour être monté sur le deuxième orifice de sortie (103) du boîtier (100), ledit adaptateur (400) comprenant un deuxième siège de sortie (403) entourant une ouverture de sortie d'adaptateur (406) configurée pour communiquer avec la deuxième ouverture de sortie (113) du boîtier (100) ; et
un deuxième élément d'étanchéité (108) configuré pour venir en appui directement ou indirectement sur le deuxième siège de sortie (403) ; et dans lequel
la première partie d'étanchéité de sortie (307 ; 307") de l'obturateur sphérique (300 ; 300' ; 300") est configurée pour venir sélectivement en appui étanche sur le deuxième élément d'étanchéité (108) par rotation de l'obturateur (300 ; 300' ; 300").

2. Ensemble de soupape de régulation selon la revendication 1, dans lequel l'obturateur sphérique (300 ; 300') comprend en outre, dans une surface d'enveloppe extérieure (304 ; 304') de celui-ci, une deuxième partie d'étanchéité de sortie (309) disposée de façon diamétralement opposée à la première partie d'étanchéité de sortie (307).

3. Ensemble de soupape de régulation selon la revendication 1 ou 2, dans lequel l'obturateur sphérique (300 ; 300') comprend en outre, dans une surface d'enveloppe extérieure (304 ; 304') de celui-ci, une partie d'étanchéité d'entrée (308), la partie d'étanchéité d'entrée (308) étant disposée de manière à encercler concentriquement au moins partiellement l'ouverture d'entrée (110) du boîtier (100) ; et une partie d'étanchéité d'actionneur (310), la partie d'étanchéité d'actionneur étant concentrique à l'axe de rotation L1 de l'obturateur (300 ; 300') et disposée à l'opposé de la partie d'étanchéité d'entrée (308).

4. Ensemble de soupape de régulation selon la revendication 2 ou les revendications 2 et 3,
dans lequel la deuxième partie d'étanchéité de sortie (309) de l'obturateur sphérique (300 ; 300') est configurée pour venir en appui étanche sur le deuxième élément d'étanchéité (108) lorsque l'obturateur sphérique (300) est tourné vers une position dans laquelle la première partie d'étanchéité de sortie (307) vient en appui étanche sur le premier élément d'étanchéité (107), permettant ainsi un écoulement de fluide à travers le boîtier (100) et le canal de fluide (301) dans l'obturateur (300 ; 300'), depuis l'orifice d'entrée (101) jusqu'au premier orifice de sortie (102) ; et dans lequel
la deuxième partie d'étanchéité de sortie (309) de l'obturateur sphérique (300 ; 300') est configurée pour venir en appui étanche sur le premier élément d'étanchéité (107) lorsque l'obturateur sphérique (300 ; 300') est tourné vers une position dans laquelle la première partie d'étanchéité de sortie (307) vient en appui étanche sur le deuxième élément d'étanchéité (108), permettant ainsi un écoulement de fluide à travers le boîtier (100) et le canal de fluide (301) dans l'obturateur (300 ; 300'), depuis l'orifice d'entrée (101) jusqu'au deuxième orifice de sortie (103).

5. Ensemble de soupape de régulation selon l'une quelconque des revendications 1 à 4, dans lequel l'adaptateur (400) est configuré pour forcer directement ou indirectement le deuxième élément d'étanchéité (108) et le premier élément d'étanchéité (107) à venir en appui étanche sur la surface d'enveloppe extérieure (304 ; 304' ; 304") de l'obturateur (300 ; 300' ; 300").

6. Ensemble de soupape de régulation selon l'une quelconque des revendications 1 à 5, dans lequel l'obturateur sphérique (300 ; 300') comprend, dans une surface d'enveloppe extérieure (304 ; 304') de celui-ci, un réseau de parties d'étanchéité (312 ; 312') configurées pour venir sélectivement en appui étanche sur le premier élément d'étanchéité (107) et le deuxième élément d'étanchéité (108) pendant la rotation de l'obturateur (300 ; 300') ; et dans lequel
le réseau de parties d'étanchéité (312 ; 312') se raccorde à la première partie d'étanchéité de sortie (307), à la deuxième partie d'étanchéité de sortie (309), à la partie d'étanchéité d'entrée (308) et à la partie d'étanchéité d'actionneur (310) de l'obturateur (300 ; 300'), formant ainsi une surface d'étanchéité continue quasiment sphérique.

7. Ensemble de soupape de régulation selon l'une quelconque des revendications précédentes,
dans lequel au moins un évidement (313) dans la surface d'enveloppe extérieure (304 ; 304') de l'obturateur sphérique (300 ; 300') est défini au moins partiellement par le réseau de parties d'étanchéité (312 ; 312') et la première partie d'étanchéité de sortie (307) et la partie d'étanchéité d'entrée (308) ou la partie d'étanchéité d'actionneur (310) ; et
dans lequel au moins un évidement (313) dans la surface d'enveloppe extérieure (304 ; 304') de l'obturateur sphérique (300 ; 300') est défini au moins partiellement par le réseau de parties d'étanchéité (312 ; 312') et la deuxième partie d'étanchéité de sortie (309) et la partie d'étanchéité d'entrée (308) ou la partie d'étanchéité d'actionneur (310).

8. Ensemble de soupape de régulation selon l'une quelconque des revendications précédentes, comprenant en outre une tige (500), ladite tige (500) comprenant une première partie d'extrémité (502) non symétrique en rotation, laquelle est configurée pour venir en prise de façon verrouillée avec un évidement complémentaire (311) d'une partie d'étanchéité d'actionneur (310) de l'obturateur (300), et dans lequel une extrémité libre (509) de la première partie d'extrémité (502) de la tige (500) présente une géométrie non symétrique en rotation, laquelle est complémentaire à une partie inférieure (314) de l'évidement (311) de l'obturateur (300 ; 300').

9. Soupape de régulation selon la revendication 1, dans laquelle le canal de fluide est un premier canal de fluide (301") sous la forme d'une gorge s'étendant le long de la surface d'enveloppe extérieure (304") de l'obturateur (300") entre une première partie d'ouverture d'entrée (302") et une première partie d'ouverture de sortie (303") du premier canal de fluide (301") ; et
dans laquelle la première partie d'étanchéité (307") s'étend de façon continue le long d'un bord (320") du premier canal de fluide (301") de l'obturateur (300").

10. Soupape de régulation selon la revendication 9, dans laquelle l'obturateur sphérique (300") comprend en outre un deuxième canal de fluide (321"), lequel s'étend à travers l'obturateur (300") entre une première ouverture (322") et une deuxième ouverture (323") ; et
dans laquelle la surface d'enveloppe extérieure (304") comprend une deuxième partie d'étanchéité (324") encerclant de façon continue la première ouverture (322") du deuxième canal de fluide (321"), ainsi qu'une troisième partie d'étanchéité (325") encerclant de façon continue la deuxième ouverture (323") du deuxième canal de fluide (321") ; et
dans laquelle les deuxième et troisième parties d'étanchéité (324", 325") encerclant les ouvertures du deuxième canal de fluide (321") sont configurées pour venir sélectivement en appui étanche sur les premier et deuxième éléments d'étanchéité (107, 108) du boîtier (100) par rotation de l'obturateur (300").
